# EUROPEAN PATENT APPLICATION

(11) **EP 2 058 954 A1**
(43) Date of publication of application: **13.05.2009**
(21) Application number: 08253671.5
(22) Date of filing: 10.11.2008
(51) Int. Cl.: H04B 3/54

(54) **System and method for establishing communications with an electronic meter**

(30) Priority: 08.11.2007 US 986340 P; 31.10.2008 US 262940
(71) Applicant: Davis Jr., Robert G., Gaithersburg, Maryland 20877 (US); White II, Melvin J., Germantown, MD 20870 (US)
(72) Inventor: Davis Jr., Robert G., Gaithersburg, Maryland 20877 (US); White II, Melvin J., Germantown, MD 20870 (US)
(74) Representative: Tunstall, Christopher Stephen

(57) **Abstract**

A system, device, and method of using a power line communication device that is communicatively connected to a low voltage power line to establish communications with one or more electronic utility meters is provided. In one embodiment the method includes setting an encryption key parameter to a first encryption key used by the one or more electronic utility meters, establishing communications via one or more low voltage power lines with at least some of the utility meters using the first encryption key, assessing the quality of communications with at least some of the utility meters, transmitting communications quality data to a remote computer system; receiving information of one or more assigned meters from the remote computer system; and storing information of the assigned meters in memory.

## Description

### Cross Reference to Related Applications

This application claims priority to U.S. Provisional Patent Application No. 60/986,340 filed November 8, 2007 and U.S. Utility Patent Application No. 12/262,940 filed 31 st October 2008.

### Field of the Invention

The present invention generally relates to power line communication systems, methods and devices, and more particularly to systems, methods and devices for establishing communication with an electronic meter.

### Background of the Invention

Commercial buildings, residences and other facilities often receive basic utilities, such as electricity, water and gas from utility companies. Utility meters are installed to measure the consumption of such utilities. Utility meters that have been in place for many years typically are mechanical devices. Typically, a technician visits the site to read the meter and report the utility consumption. More recently, electronic meters have become common for measuring electric power consumption. In some instances a technician still visits the site and connects to an interface of the electric utility meter to electronically read the electric utility meter. In other instances the power usage data may be transmitted from the meter to a remote location without on-site technician intervention.

Each electric utility meter is supplied electric power from a distribution transformer that steps down the voltage from a medium voltage power line to a low voltage power line connected to a low voltage power line. Typically, each distribution transformer supplies power to one to ten customer premises, with each customer premises having a different electric utility meter. Thus, each meter is associated with a different customer premises. It is desirable for the utility to know which distribution transformer is connected to which customer premises and such information typically is stored in a geographical information system.

A geographic information system (GIS) is a computer system for capturing, storing, analyzing and managing data and associated attributes that are often used by electric utility companies to operate the power distribution system. The GIS typically includes a database that stores information about power distribution infrastructure and power customers. For example, in power distribution systems that employ automated meter reading (AMR) the GIS database may include information identifying a particular customer address and an associated automated meter.

Complete and accurate data is important for measuring current demand, predicting future demand, and responding to power outages and other troubleshooting. For those power distribution systems that have not previously employed AMR, however, the associated GIS database may not have been updated with all the information that is now necessary to employ AMR and/or respond to power distribution events (e.g., events). For example, for an AMR system that employs power line communications, it may be desirable to know which distribution transformer is supplying power to a particular customer premises (i.e., to know which distribution transformer is connected to a particular electric power meter) so that, if a customer complains of a power outage, the utility can dispatch personnel directly to the transformer supplying power. This may be especially helpful for underground power line systems where personnel cannot easily inspect the power lines. Additionally, the accurate premise to transformer relationship provides for the creation of a virtual metering point at the transformer. This virtual metering point is derived by an aggregation of all individual meters served by that transformer. This virtual metering point provides great value to the transmission and distribution activities. It allows an accurate view of transformer loading and thereby an ability to predict transformer life-cycle events. With the accurate knowledge of the transformer to premise relationship it is also becomes possible to conduct localized direct load control events. This can allow the utility to shed load based on events occurring at a specific transformer versus at a feeder or substation level, which is more common.

In the past, there typically has been no way of accurately determining that a given utility meter is connected to a given power distribution transformer without sending utility personnel to inspect the network. In addition, there has been no automated mechanism to update the database when changes are made to the power delivery system. Consequently, there is a need for a reliable means of establishing communications with a utility meter so as to obtain accurate and complete utility system information. These and other advantages may be provided by one or more embodiments of the present invention.

### Summary of the Invention

The present invention provides a system, device, and method of using a power line communication device that is communicatively connected to a low voltage power line to establish communications with a one or more electronic utility meters. In one embodiment the method includes setting an encryption key parameter to a first encryption key used by the one or more electronic utility meters, establishing communications via one or more low voltage power lines with at least some of the utility meters using the first encryption key, assessing the quality of communications with at least some of the utility meters, transmitting communications quality data to a remote computer system; receiving information of one or more assigned meters from the remote computer system; and storing information of the assigned meters in memory.

The invention will be better understood by reference to the following detailed description taken in conjunction with the accompanying drawings.

### Brief Description of the Drawings

The invention is further described in the detailed description that follows, by reference to the noted drawings by way of non-limiting illustrative embodiments of the invention, in which like reference numerals represent similar parts throughout the drawings. As should be understood, however, the invention is not limited to the precise arrangements and instrumentalities shown. In the drawings:

Figure 1 is a block diagram of an example power line communication system;

Figure 2 is a block diagram of a system for establishing communication with a utility meter according to an example embodiment of the present invention;

Figure 3 is a block diagram of an example embodiment of a backhaul device;

Figure 4 illustrates an implementation of example embodiments of a backhaul device and a access device;

Figure 5 is a block diagram of an example embodiment of an access device;

Figure 6 is a flow chart of a method for establishing communication with a utility meter according to an example embodiment of the present invention;

Figure 7 is a flow chart of a corresponding method for establishing communication with a utility meter by a power line communication device according to an example embodiment of the present invention; and

Figure 8 is a flow chart of a method for identifying the distribution transformer that is electrically connected to a utility meter according to an example embodiment of the present invention.

### Detailed Description of Illustrative Embodiments

In the following description, for purposes of explanation and not limitation, specific details are set forth, such as particular networks, communication systems, computers, terminals, devices, components, techniques, data and network protocols, power line communication systems (PLCSs), software products and systems, enterprise applications, operating systems, development interfaces, hardware, etc. in order to provide a thorough understanding of the present invention.

However, it will be apparent to one skilled in the art that the present invention may be practiced in other embodiments that depart from these specific details. Detailed descriptions of well-known networks, communication systems, computers, terminals, devices, PLCSs, components, techniques, data and network protocols, software products and systems, operating systems, development interfaces, and hardware are omitted so as not to obscure the description of the present invention.

According to an embodiment of the present invention, a process is performed to establish communication between a utility meter and a power line communication device over a low voltage power line. The power line communication device may receive commands from a power line server (PLS), or other remote computer system. In one example, when an electrical utility meter is installed, information may be collected to identify the meter. For example, a serial number and a location (e.g., address; GPS coordinates) may be obtained. In some embodiments the information may include the address of the customer premises associated with the meter. Such information, including the serial number and associated customer premises address, may be provided to the PLS and stored in memory.

In an example embodiment of the present invention, the GIS data may unclear (or inaccurate) as to what distribution transformer a utility meter is connected, in which case the PLS may select the power line communication devices that are sufficiently close to the customer address that they may be able to communicate with the identified utility meter (and be connected to the same LV power line). For example, the PLS may store information (e.g., serial number; IP (Internet Protocol) address, MAC (media access control) address as well as location information) which allows the PLS to identify the power line communication devices (PLCD) 133 (e.g., such as a backhaul device 138, access device 139, or repeater 135 collectively referred to herein as PLCD 133) in a given area. PLCDs 133 within a given proximity may be included among the potential PLCDs with which a given utility meter may communicate.

Each PLCD 133 may perform a link assessment and report the results to the PLS. One of the PLCDs, (e.g., the PLCD having reported the best communication link quality with the utility meter) may be selected to serve as the communication node for communications with the utility meter. Accordingly, communication may be established with the utility meter.

For an electronic utility meter in a power distribution system, the power line communication device selected as the communication node of a utility meter typically will be the access device coupled to the low voltage power (e.g., near a transformer) providing power to the premises at which the utility meter is located. Information identifying the transformer may be stored at the PLS and/or PLCD. Thus, the transformer that is connected to the utility meter may be identified, and an accurate map of the power distribution system, including transformers and utility meters, may be obtained.

Following is a description of embodiments of systems and methods for establishing communication with a utility meter. In one embodiment, utility meters are installed as part of a power line communication system. For example, a power line communication system providing broadband over power line services to premises may implement the method of establishing communication with a utility meter. A power line communication device may be part of the power line communication system and facilitate communications with a utility meter. In another embodiment, the power line communication device may communicate with a power line server or other remote computer system, by an alternate communication medium, (e.g., wireless, cable).

### System for Establishing Communication with a Utility Meter

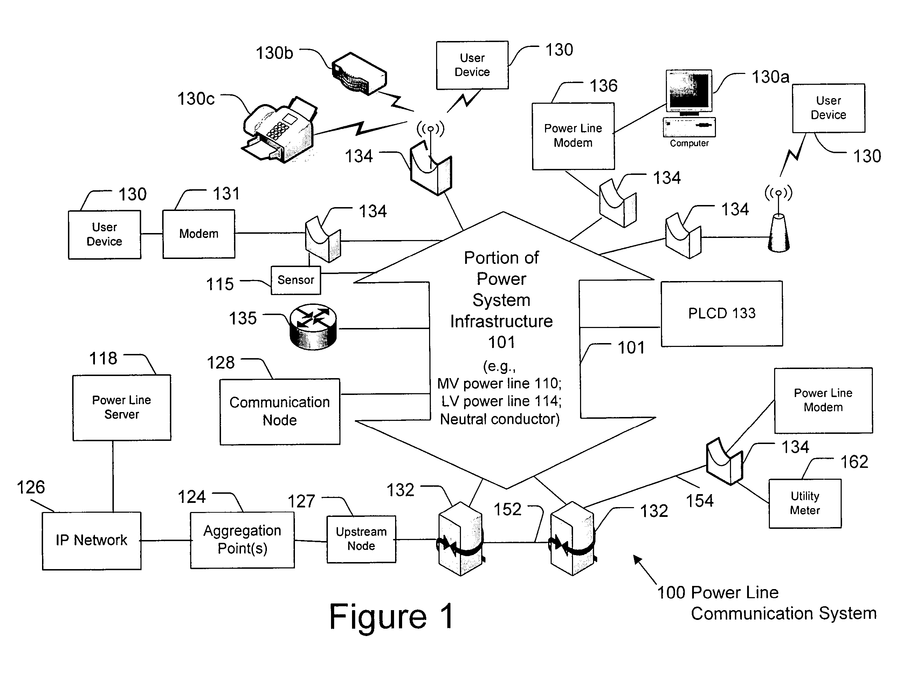

Figure 1 shows a portion of a power line communication system (PLCS) 100 which may implement a method for establishing communication with a utility meter according to an example embodiment of the present invention. The PLCS 100 may provide user services and communication services to devices which are communicatively coupled to the PLCS 100. Exemplary services may include high speed broadband internet access, mobile telephone communications, broadband communications, streaming video and audio services, and/or other communication services.

Thus, devices coupled to, and being served by the PLCS 100 may include power distribution system devices, such as automated utility meters 162 and power distribution parameter sensor devices 115. In some embodiments, the PLCS 100 may obtain power distribution data, which may include, but is not limited to power usage, power line voltage, power line current, load distribution, power factor, load transients, and power outage detection.

The PLCS 100 may provide communication and user services to homes, buildings and other structures, and to each room, office, apartment, or other unit or sub-unit of multi-unit structures. Communication and user services also may be provided to mobile and stationary devices in outdoor areas such as customer premises yards, parks, stadiums, and also to public and semi-public indoor areas such as subway trains, subway stations, train stations, airports, restaurants, public and private automobiles, bodies of water (e.g., rivers, bays, inlets, etc.), building lobbies, elevators, etc.

The PLCS 100 may include a plurality of communication nodes 128 which form communication links using power lines 110, 114 and other communication media. Different types of communication nodes 128 include a backhaul node 132, an access node 134, and a repeater node 135. A given node 128 may serve as one or more of a backhaul node 132, access node 134, and repeater node 135.

A communication link may be formed between two communication nodes 128 over a communication medium. Some links may be formed over MV power lines 110 while others may be formed over LV power lines 114. Other links may be gigabit-Ethernet links 152, 154 formed, for example, using a fiber optic cable. Thus, some links may be formed using a portion 101 of the power system infrastructure, while other links may be formed over another communication media, (e.g., a coaxial cable, a T-1 line, a fiber optic cable, wirelessly (e.g., IEEE 802.11 a/b/g/n, 802.16, 1 G, 2G, 3G, or satellite such as WildBlue®)). The links formed by wired or wireless media may occur at any point along a communication path between a backhaul node 132 and a user device 130.

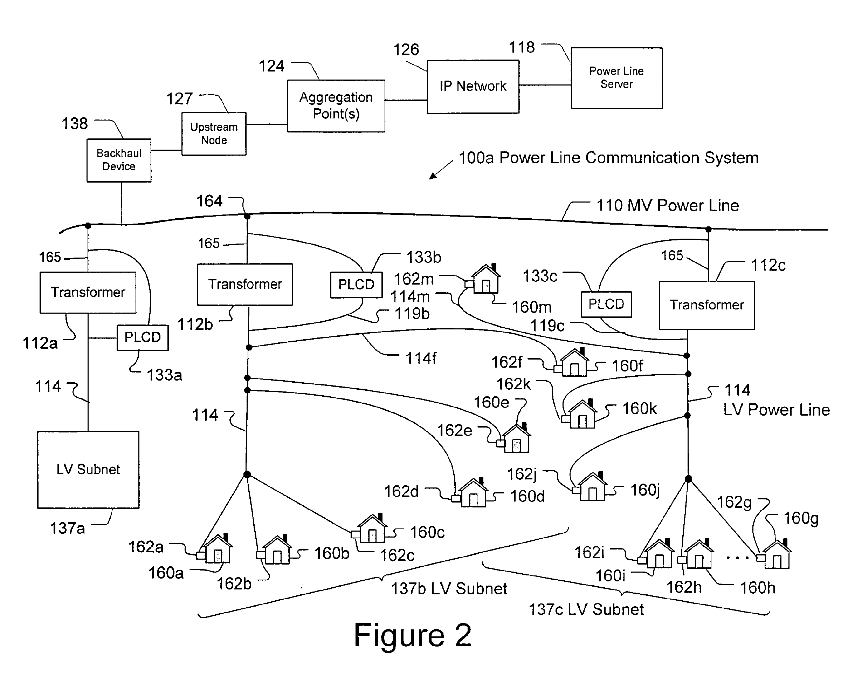

Each communication node 128 may be formed by one or more communication devices. Communication nodes which communicate over a power line medium include a power line communication device (PLCD) 133. Exemplary PLCDs 133 include a backhaul device 138 (see Figure 2, 3, 4), an access device 139 (see Figure 2, 4, 5), and a repeater 135 (see Figure 1). Communication nodes which communication over a wireless medium include a wireless transceiver, which may comprise mobile telephone cell site/transceiver (e.g., a micro or pico cell site) or a IEEE 802.11 transceiver (Wifi). Communication nodes which communicate over a coaxial cable may include a cable modem while communication nodes which communicate over a twisted pair may include a DSL modem. A given communication node typically will communicate bi-directionally (either full duplex or half duplex), which may be over the same or different types of communication media. Accordingly, a communication node 128 may include one, two or more communication devices, which may communicate along the same or different types of communication media.

Upstream communications from customer premises as well as control and monitoring communications from power line communication devices, may be communicated to an access node 134, to a backhaul node 132, and then to an aggregation point 124 which is communicatively coupled to the IP network 126. Communications may traverse the IP network 126 to a destination, such as a web server, power line server 118, or an end user device. The backhaul node 132 may be coupled to the aggregation point 124 directly or indirectly (i.e., via one or more intermediate nodes 127). The backhaul node 132 may communicate with its upstream device via any of several alternative communication media, such as a fiber optic cable (digital or analog (e.g., Wave Division Multiplexed)), coaxial cable, WiMAX, IEEE 802.11, twisted pair and/or another wired or wireless media.

Downstream communications from the IP network 126 typically are communicated through the aggregation point 124 to the backhaul node 132. The aggregation point 124 typically includes an Internet Protocol (IP) network data packet router and is connected to an IP network backbone, thereby providing access to an IP network 126 (i.e., can be connected to or form part of a point of presence or POP). Any available mechanism may be used to link the aggregation point 124 to the POP or other device (e.g., fiber optic conductors, T-carrier, Synchronous Optical Network (SONET), and wireless techniques).

A backhaul node 132 may serve as an interface between a power line (e.g., an MV power line 110) and an upstream node 127, which may be, for example, connected to an aggregation point 124 that may provide a connection to an IP network 126. The PLCS 100 typically includes a plurality of backhaul nodes 132.

An access node 134 may transmit data to and receive data from, one or more user devices 130, utility meters, and/or other network destinations. Power line parameter data or utility meter data may be received by an access node's power line communication device 139 and routed through the network 104 to a backhaul node 132. Downstream data may be sent through the network 104 to a user device 130. Exemplary user devices 130 include a computer 130a, LAN, a WLAN, router 130b, Voice-over IP endpoint, game system, personal digital assistant (PDA), mobile telephone, digital cable box, security system, alarm system (e.g., fire, smoke, carbon dioxide, security/burglar, etc.), stereo system, television, fax machine 130c, HomePlug residential network, or other user device having a data interface. The system also may be used to communicate utility usage data from an automated gas, water, and/or electric power meter. Additionally, the system may be used to communicate with any premise based utility devices. Examples are a direct load control switch, a remote programmable thermostat, a price signaling device or remote connect/disconnect device. A user device 130 may include, or be coupled to, a modem to communicate with a given access node 134. Exemplary modems include a power line modem 136, a wireless modem 131, a cable modem, a DSL modem or other suitable modem or transceiver for communicating with its access node.

A repeater node 135 may receive and re-transmit data (i.e., repeat), for example, to extend the communications range of other communication elements. As a communication traverses the communication network 104, backhaul nodes 132 and access nodes 134 also may serve as repeater nodes 135, (e.g., for other access nodes and other backhaul nodes 132). Repeaters may also be stand-alone devices without additional functionality. Repeaters 135 may be coupled to and repeat data on MV power lines or LV power lines (and, for the latter, be coupled to the internal or external LV power lines).

Figure 2 shows a portion of a PLCS 100a, including power line communication devices (PLCD) 133 and power distribution elements 110, 112, 114. A medium voltage (MV) power line 110 provides power to a local area. Distribution transformers 112 are coupled to the MV power line 110 at various locations, and step down the medium voltage to a low voltage. The low voltage power is typically delivered to a residence or other structure. The low voltage (LV) power lines 114 extend from each transformer 112 to the power utility meters 162 at the various customer premises 160 receiving power. As discussed, typically each customer premises (CP) 160 has an associated utility meter 162 (often located at the CP 160) to measure the power consumed by the CP 160.

Referring to Figure 2, each transformer 112 delivers power to one or more customer premises 160 via external power lines 114. As used herein, the term "low voltage subnet" (or "LV subnet") refers to those customer premises (and associated LV power lines) and meters that are connected to a common distribution transformer 112. Communication devices connected to an LV subnet (for power line communications) share the LV power lines 114 as a communication medium. In some PLC architectures, such devices may also use the same access node 134 for upstream communications. Thus, each subnet 137 may include one or more premises 160 served by a PLCD 133 and each customer premises 160 may have an associated utility meter 162.

In an example embodiment of the system for establishing communication with a utility meter, a power line server 118 or other remote computer system may send commands through the IP network 126 to the various power line communication devices 133. Following are descriptions of various components of an exemplary embodiment of a system for establishing communication with a utility meter.

### Backhaul Device 138:

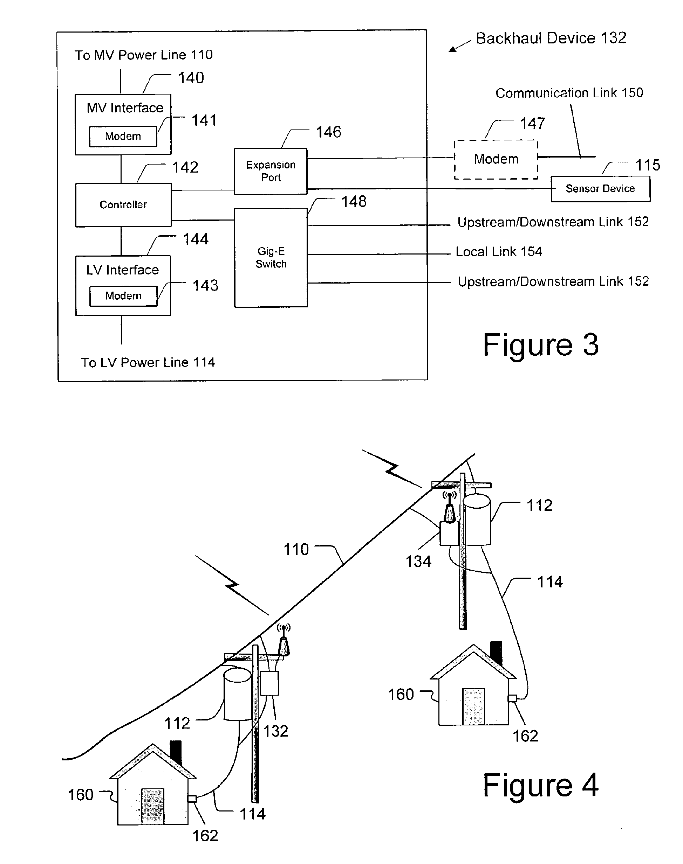

Figures 3 and 4 show an example embodiment of a backhaul device 138 which may form all or part of a backhaul node 132. The backhaul device 138 may include a medium voltage power line interface (MV Interface) 140, a controller 142, an expansion port 146, and a gigabit Ethernet (gig-E) switch 148. In some embodiments the backhaul device 138 also may include a low voltage power line interface (LV interface) 144. The MV interface 140 is used to communicate over the MV power lines 110 and may include an MV power line coupler coupled to an MV signal conditioner, which may be coupled to an MV modem 141. The MV power line coupler prevents the medium voltage power from passing from the MV power line 110 to the rest of the device's circuitry, while allowing the communications signal to pass between the backhaul device 138 and the MV power line 110. The MV signal conditioner may provide amplification, filtering, frequency translation, and transient voltage protection of data signals communicated over the MV power lines 110. Thus, the MV signal conditioner may be formed by a filter, amplifier, a mixer and local oscillator, and other circuits which provide transient voltage protection. The MV modem 141 may demodulate, decrypt, and decode data signals received from the MV signal conditioner and may encode, encrypt, and modulate data signals to be provided to the MV signal conditioner.

The backhaul device 138 also may include a LV Interface 144 for receiving and transmitting data over an LV power line 114. The LV interface 144 may include an LV power line coupler coupled to an LV signal conditioner, which may be coupled to an LV modem 143. In one embodiment the LV power line coupler may be an inductive coupler. In another embodiment the LV power line coupler may be a conductive coupler. The LV signal conditioner may provide amplification, filtering, frequency translation, and transient voltage protection of data signals communicated over the LV power lines 114. Data signals received by the LV signal conditioner may be provided to the LV modem 143. Thus, data signals from the LV modem 143 are transmitted over the LV power lines 110 through the signal conditioner and coupler.
The LV signal conditioner may be formed by a filter, amplifier, a mixer and local oscillator, and other circuits which provide transient voltage protection. The LV modem 143 may demodulate, decrypt, and decode data signals received from the LV signal conditioner and may encode, encrypt, and modulate data signals to be provided to the LV signal conditioner.

The backhaul device 138 also may include an expansion port 146, which may be used to connect to a variety of devices. For example a wireless access point, which may include a wireless transceiver or modem 147, may be integral to or coupled to the backhaul device 138 via the expansion port 146. The wireless modem 147 may establish and maintain a communication link 150 with remote wireless devices. In such other embodiments the expansion port 146 may provide an Ethernet connection allowing communications with various devices.

The backhaul device 138 also may include a gigabit Ethernet (Gig-E) switch 148. Gigabit Ethernet is a term describing various technologies for implementing Ethernet networking at a nominal speed of one gigabit per second, as defined by the IEEE 802.3z and 802.3ab standards.

The backhaul device 138 also may include a controller 142 which controls the operation of the device 138 by executing program codes stored in memory. The backhaul 138 may also include a router, which routes data along an appropriate path. In this example embodiment, the controller 142 includes program code for performing routing (hereinafter meant to include switching and/or bridging). As used herein, a "routing device" may comprise a switch, bridge, or router that may be integrated into (or connected to) a PLCD 133. Thus, the controller 142 may maintain a table of which communication devices are connected to each port and interface in memory. The controller 142 may match data packets with specific messages (e.g., control messages) and destinations, perform traffic control functions, perform usage tracking functions, authorizing functions, throughput control functions and similar related services.

### Access Node 139:

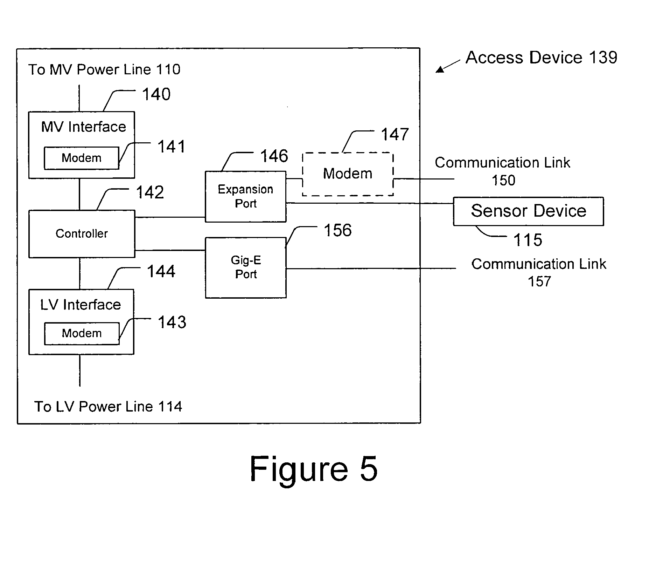

Figures 4 and 5 show an example embodiment of a access device 139, which may serve as (or form part of) an access node 134. Although Figure 3 shows the access device 139 coupled to an overhead power line, in other embodiments a access device 139 may be coupled to an underground power line. The access device 139 may include a MV Interface 140 having a MV modem 141, a controller 142, LV interface 144 having a LV modem 143, and an expansion port 146, which may have the functionality, and functional components as previously described above with regard of the backhaul device 138. The access device 139 also may include a gigabit Ethernet (gig-E) port 156. The gig-E port 156 may maintain a connection using a gigabit Ethernet protocol for communicating with various devices over optical fiber, coaxial cable or other wired medium. A power parameter sensor device 115 may be connected to the access device 139 to measure and/or detect one or more parameters of the MV power or the LV power line.

The controller 142 controls communications through the access device 139. Accordingly, the access device 139 receives data from the MV interface 140, LV interface 144, the expansion port 146, or the gig-E port 156 and may route the data to the MV interface 140, LV interface 144, expansion port 146, or gig-E port 156 under the direction of the controller 142. As discussed with the backhaul device, the access device 139 may have a routing table stored in memory of the controller 142 that allows the controller to determine how (or if) data packets should be routed. For example, the MAC address (and an associated IP address) of one or more utility meters and user devices connected to the LV subnet serviced by the access device 139 may be stored in the routing table.

### Other Devices:

Another communication device is a repeater (e.g., indoor, outdoor, low voltage and/or medium voltage) which may form part of a repeater node 135. A repeater serves to extend the communication range of other communication elements (e.g., access devices 139, backhaul devices 138, and other nodes). Note that in some embodiments, a repeater node 135 may also include a device for providing communications to a user device 130 (and thus also serve as an access node 134).

A power line modem 136 couples a communication to and from an LV power line 114. A power line modem 136 is coupled on one side to the LV power line. On the other side, the power line modem 136 includes a user device interface that may include connector to connect to a user device 130 or include a wireless transceiver. One protocol for communicating with access devices 139 over an LV power line is the HomePlug 1.0 (Turbo, or A/V) standard of the HomePlug® Alliance. In this manner, a customer can connect a variety of user devices 130 to the communication network 104.

### Power Line Server 118:

The PLS 118 (see Figures 1 and 2) is a computer system having a memory for storing a database of information about the PLCS 100. In an exemplary embodiment the PLS 118 may include a network element manager (NEM) that monitors and controls the PLCS 100. Network operations personnel may access information via the PLS 118 to allocate users and network equipment, to manage customer data, and to monitor system status, performance and usage. The PLS 118 may be at an operations center remotely located from the various power line communication devices, and serve to monitor and control such devices via the Internet. Various devices (MV modems and LV modems of a backhaul point 138, access device 139, or repeater 135; user devices (or an associated power line modem); utility meters 162; upstream devices and aggregation points) communicating over the PLCS 100 may receive an Internet identity from the PLS 118. In particular, the PLS 118 may assign devices an IP address and store the IP address and other device identifying information (e.g., the device's location, MAC address, serial number, etc.) in its memory.

The PLS 118 may transmit any number of commands to the power line communication devices 133 to manage the PLCS 100. These commands may include altering configuration information, synchronizing the time of a device with that of the PLS, controlling measurement intervals (e.g., voltage measurements), requesting measurement or data statistics, requesting the status of user device activations, rate shaping, and requesting reset or other system-level commands. Any or all of these commands may require a unique response from a PLCD 133, which may be transmitted by the PLCD 133 and received and stored by the PLS 118. The PLS 118 may include software to transmit a command to any or all of the PLCD 133 to schedule a measurement so that all of the network elements of the PLCS take the measurement(s) at the same time (such as a voltage measurement of a low voltage power line).

In addition to commands and responses, a PLCD 133 may have the ability to send Alerts and Alarms to the PLS 118. Alerts typically are either warnings or informational messages transmitted to the PLS in response to events detected or measured by the PLCD 133. Alarms typically are error conditions detected. One example of an Alarm is an Out-of-Limit Alarm that indicates that an out-of-limit condition has been detected at the PLCD, which may indicate a power outage on the LV power line, an MV or LV voltage too high, an MV or LV voltage too low, a temperature measurement inside the PLCD 133 is too high, and/or other out-of-limit conditions. Information about the Out-of-Limit condition, such as the type of condition (e.g., a LV voltage measurement, a temperature), the Out-of-Limit threshold exceeded, the time of detection, and the amount (e.g., over, under, etc.), may be stored in the memory of the PLCD 133 and transmitted with the alert or transmitted in response to a request from the PLS 118.

In addition, the PLS 118 may approve or deny authorization requests, obtain status reports and measurements from the PLCD 133 and provide application software upgrades to the PLCD 133. The PLS 118, by collecting electric power distribution information and interfacing with utilities' back-end computer systems also may facilitate enhanced distribution services such as automated meter reading, outage detection, load balancing, distribution automation, Volt/Volt-Amp Reactance (Volt/VAr) management, and other similar functions.

### Utility Meter 162:

Communications may be established according to example embodiments of this invention for any utility meter 162 having an interface for remote communication via a low voltage power line. In other embodiments, the utility meter 162 may have a wireless interface for wireless communications with a PLCD 133 (although such a system may not provide all of the same benefits as the system described below). The utility service being metered may be power, gas, water, or other service. With regard to power, utility service providers monitor the power usage by customers with power meters, which measure the amount of energy consumed, typically measured in kilowatt-hours ("kwh"), by each customer's premises 160. Electronic utility meters are well known that have interfaces for communicating utility data collected by the utility meter. An description of such an electronic utility meter is provided in U.S. Pat. Appl. No. 11/341,646, filed January 30, 2006, entitled "Power Line Communications Module and Method," which is hereby incorporated by reference in its entirety.

As shown in Figure 2, utility meters 162 are coupled to a low voltage power line 114. Data from a given utility meter 162 may be communicated along the LV power line 114 to an access device 139. The access device 139 may in turn communicate the utility meter data to a remote location for storage and processing. In one embodiment, the utility meter data is communicated through the PLCS 100a and through an IP network 126 to a remote location, where a remote computer system such as a power line server (PLS) 118 may store and process the utility data.

### Methods of Establishing Communication with a Utility Meter

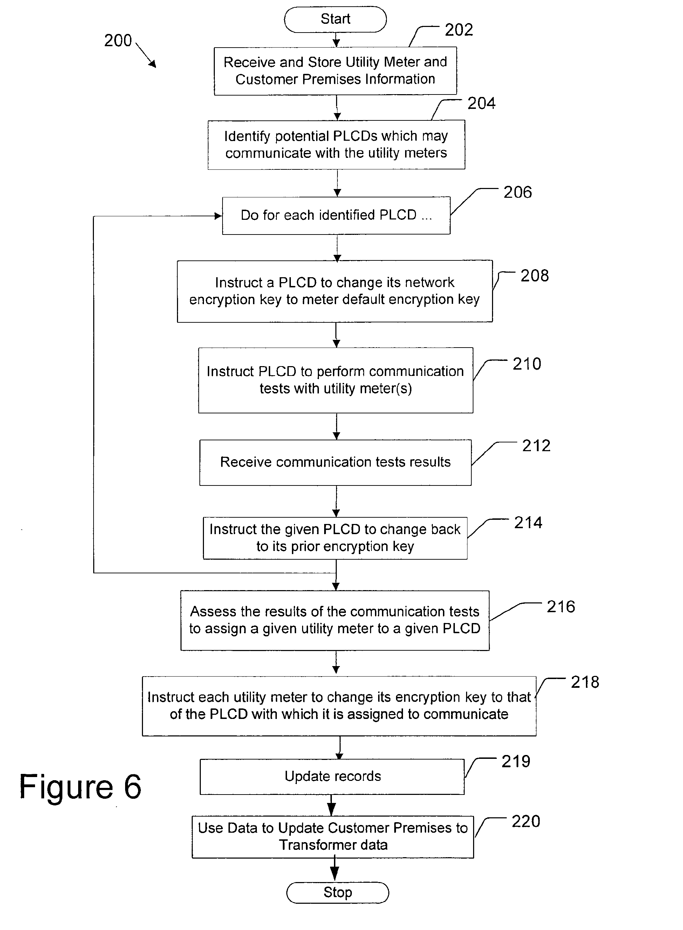

Figure 6 shows a flow chart of an example process 200 for establishing communication with one or more utility meters 162, such as one or more newly installed utility meter. The process 200 may be implemented by one or more computers, such as a power line server (PLS) 118. When utility personnel install utility meters 162, the serial number (or other identifying information) of the utility meter 162 and the associated customer premises address (or other identifying information) are recorded. At step 202 the PLS 118 receives and stores this information. In various embodiments, the utility personnel enter the information into a device that at some time communicates, directly or indirectly, to the PLS 118. Alternatively, the information is manually entered into the PLS 118, such as via a keyboard. Receipt of the data at the PLS 118 may serve as notification of the newly installed utility meters 162.

As discussed, in some instances the PLCD 133 electrically connected to a given utility meter 162 (e.g., via a low voltage power line) may be unknown because the information in the GIS database is incomplete. When each PLCD 133 is installed, however, the PLS 118 may receive and store the MAC address (or serial number or other identifying information) and location information (e.g., GPS location; structure number such as a utility pole number) for each installed PLCD 133. Typically a PLCD 133 is installed at (e.g., on the same utility pole or a nearby pole for overhead or on the same pad for underground transformers) as a distribution transformer. At step 204, based on the location information of each utility meter 162 and each of a group of PLCDs 133, the PLS 118 identifies the PLCDs 133 that might be able to communicate with each meter 162 and, which in this embodiment comprise the PLCDs that might be on the same LV subnet with each meter. This process may be performed via any suitable method including, for example, by using GPS coordinates (e.g., to determine distances between each meter 152 and PLCD 133) to select the PLCDs 133 within a given radius of each meter or to select the two closest PLCDs to each meter. Alternately, the process may simply include selecting a large number of PLCDs 133 known to be within the same general area as the utility meter (or the customer premises address) such as by identifying all the PLCDs 133 on the same street, block, or other area. In an example embodiment, three access devices 139 may be identified as being within an area that permits possible communication with fifteen utility meters 162 because they are on the same block.

At step 206, a sequence of steps 208 through 214 may be implemented for each PLCD identified in step 204. When a utility meter 162 is first booted up (i.e., receives power) its encryption key (if any) typically will be set to a default encryption key (hereinafter referred to as the "meter default encryption key"). Thus a group of newly installed utility meters in a given neighborhood may initially power up to have the same default encryption key (which differs from the PLCDs' encryption keys). At step 208, the PLS 118 sends a command to a given PLCD 133 instructing the PLCD 133 to change its network encryption key to the meter default encryption key to thereby match the key used by the utility meter(s) 162 which the PLCD is to attempt communication. Thus, when a given PLCD 133 changes its key to the meter default encryption key, the PLCD 133 will have the same encryption key of newly installed meters and may then communicate with any such utility meters where the reception is satisfactory.

At step 210, the PLS 118 instructs the PLCD to process utility meter 162 communication attempts, which may include performing communication testing with one or more utility meters 162. Various testing protocols may be performed. In one embodiment, the PLS 118 also transmits the MAC address (or IP address or other address) of the utility meter 162 so that the specific meter may be addressed. In another embodiment, the PLCD 133 transmits a multicast or broadcast message (a message that is not addressed) and waits for a reply from all utility meters 162 that receive the message. In yet another embodiment, the utility meters 162 are preprogrammed (e.g., by the manufacturer) to attempt to communicate with nearby devices at their initial power up (e.g., by sending a DHCP request or other communication negotiation). Thus, the PLCD may simply "listen" for any data, or particular data known to be communicated by a particular meter model, via its LV interface that may comprise the attempt to communicate by the meter(s) 162.

In any instance, once a communication is established between a PLCD and a meter, the PLCD 133 will generate traffic between the utility meter with a ping test or other communication testing protocol. A Low Voltage Quick Test (i.e., a standard Bytes 336 request qualified by a specific amount of traffic between the PLCD 133 and utility meters 162 available in some power line modem chip sets available from Intellon of Ocala, FL) may be performed. In addition to the tests, the utility meter 162 may transmit its serial number and/or MAC address to the PLCD 133.

The quality and other attributes of any response may be sent by the PLCD and to the PLS along with information identifying (1) the PLCD (an IP address, serial number, pole number); and (2) the utility meter (e.g., a MAC address and/or a serial number). At step 212, the PLS 118 receives (and stores) the test results from a given PLCD for each of the utility meters 162 that the PLCD 133 tested. At step 214, the PLS may send a command to the PLCD 133 instructing it to change its network encryption key back to the prior value used by the PLCD (if necessary) (i.e., the key used before the communication tests). Accordingly, the PLCD 133 may return to its normal operations.

Once the PLS 118 has received the results of the communications tests from the various PLCDs 133 identified at step 204, the results may be assessed at step 216. In particular, for any given utility meter there typically will be one PLCD 133 that obtained the best communication test results. This PLCD 133 typically will be the PLCD 133 directly electrically connected to the utility meter 162 by an LV power line 114.

At step 218, the PLS 118 may send a command to the selected PLCD 133 instructing it to transmit a command to a particular utility meter instructing it to change its network encryption key to that of the selected PLCD 133. Thus, the PLS 118 assigns the selected PLCD 133 and utility meter 162 an encryption key for use in communications with each other that is different than that used by other PLCD in the PLCS 100a (i.e., within some defined geographic sub-portion of the PLCS 100a). In addition, the PLS may send information (e.g., MAC address and/or IP address) to the PLCD 133 to update its routing tables in memory so that data addressed to its newly assigned utility meter(s) are routed (by the PLCD 133) to the appropriate utility meter 162. In addition, the PLCD may send information (e.g., its own LV MAC address) to each of its assigned utility meters 162 to provide the meters 162 with information sufficient to communicate with the PLCD 133. In some embodiments, in order to instruct the meter to change its encryption to match the key of the PLCD, the PLCD 133 may need to change its encryption key back to the meter default key (temporarily for that communication) so that the meter can decrypt the communication. In other embodiments, the PLCD 133 may use a unique encryption key for that meter (as received from the PLS 118) for the communication to instruct the meter to change its encryption to match the key of the PLCD. In still other embodiments, the communication to the meter is not encrypted.

The utility meter 162 assigned to a PLCD 133 is associated with that PLCD in memory (along with its MAC address, encryption key, and various communication parameters) at step 219. The information may be provided by the utility or any suitable means. As discussed, the PLS also stores information identifying the address of the customer premises associated with the utility meter and the distribution transformer to which a PLCD 133 is electrically connected (i.e., the LV power lines). Consequently, the PLS includes information sufficient to determine the distribution transformer supplying power to a particular customer premises as indicated by step 220. Thus, if a particular customer (or the utility meter) reports a power outage, brown out, or other power problem, the utility can identify the transformer serving that customer premises in order to easily dispatch utility personnel directly to the transformer. In addition, the PLS includes information sufficient to determine the address of all the customer premises that are attached to (and receive power from) each distribution transformer (and the associated MV power line). This information can be used to update and correct the GIS database.

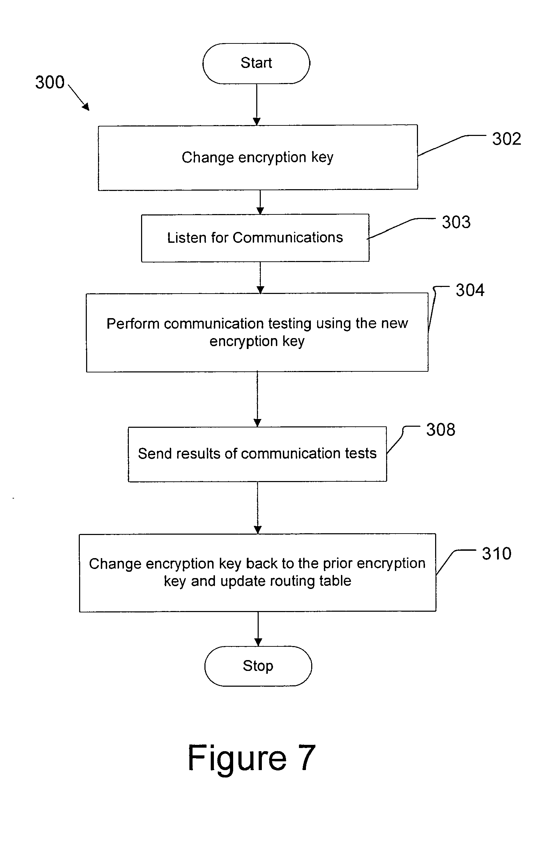

Figure 7 shows a flow chart of a process 300 performed by a PLCD 133 (or other device) for establishing communication with one or more utility meters 162. In particular, process 300 includes steps performed by a PLCD 133 that correspond to steps performed by the PLS 118 for the process 200 of Figure 6. At step 302, the PLCD 133 receives and implements a command from the PLS 118 to change the PLCD's network encryption key to the meter default encryption key. In another embodiment, the encryption key is automatically changed periodically by the PLCD 133 without receiving a command. At step 303, the PLCD 133 may listen for communication attempts from one or more utility meters using the new encryption key. At step 304, the PLCD 133 responds to attempts to communicate by utility meters and performs communication testing with the utility meters to assess the quality of communications. In some embodiments, one command may be received encompassing instructions for testing multiple utility meters or to change the encryption key and perform testing. In another embodiment, separate commands may be received for each utility meter to be tested. In one example embodiment, the PLCD 133 implements the command by listening (on the LV power line via its LV interface) for an attempt to communicate by one or more utility meters 162. For example, after power up some utility meters 162 may periodically transmit a DHCP request (to request an IP address) that would be received by a PLCD 133 that is connected to the same LV power line. While the PLCD 133, in this embodiment, does not immediately respond to the request (i.e., does not provide an IP address), the receipt of the DHCP request (or other communication) allows the PLCD 133 to establish some basic communications with the utility meter 162 (and to perform a test of the communication link, such as, for example, by performing a Bytes 336 request qualified by a specific amount of traffic between the PLCD and utility meter(s)). In addition to test results, the PLCD 133 will receive information identifying the utility meter 162 (such as the MAC address of the meter's modem) during the communications. In some embodiments, simply receiving data with a minimum bit error rate, or simply intelligibly receiving data, may be a sufficient assessment of the link quality. At step 308 the PLCD 133 sends the results of the communications with the meters as well as the meter identifying information (e.g., MAC address) to the PLS 118, which stores the data. At step 310, the PLCD 133 may receive and implement a command to (1) transmit a command to the utility meter(s) 152 to that have been assigned to the PLCD 133 to change its encryption key to the PLCD's encryption key; (2) restore its network encryption key to the PLCD encryption key (i.e., the key used prior to being changed for the utility meter communication testing; and (2) update its routing table and other communication parameters in order to communicate with its assigned meter(s) 162.

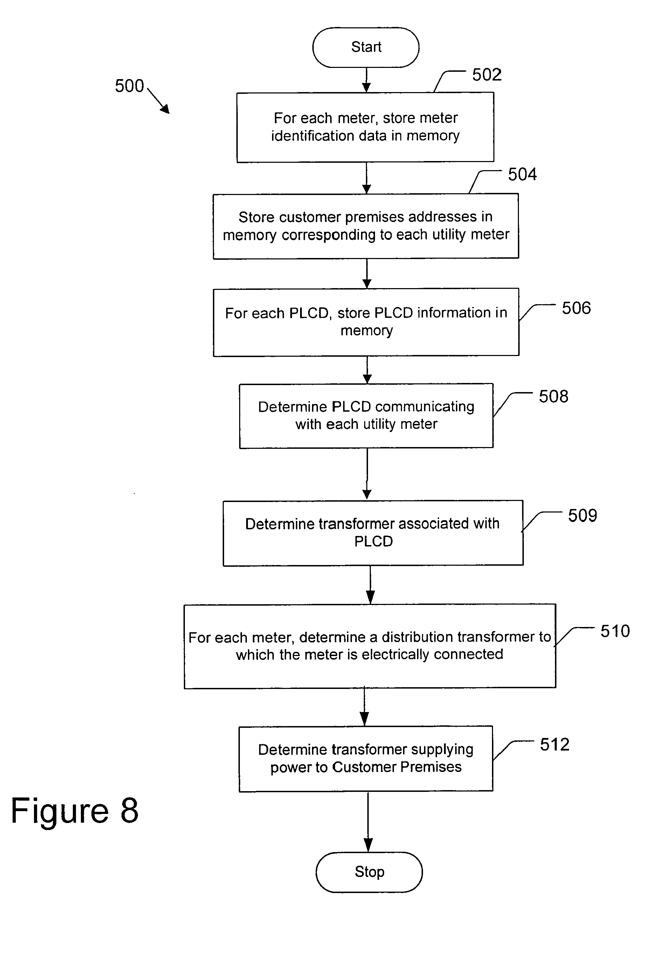

Figure 8 illustrates a flow chart of a process 500 for determining the distribution transformer 112 to which a utility meter 162 is electrically connected that may be performed by the PLS 118 or other remote computer. As discussed, the PLCD 133 that is selected to serve as the upstream communications device for receiving the meter's utility data is presumed to be the PLCD 133 located at (or connected to the LV power lines 114 of) the transformer 112 that supplies power to the customer premises at which the utility meter is located.

At steps 502, utility meter identification information is stored in memory, such as at the PLS 118, for one or more utility meters. As described above, when a given electrical utility meter is installed, information may be collected to identify the meter, such as a serial number and a location (e.g., customer premises address; GPS coordinates). Such information may be provided to the PLS and stored in memory, such as by being entered manually at a key board or by being received through an I/O interface (e.g., a scanner) or communication port. This information may be associated with a MAC address of the meter in memory (determined based on the serial number of the meter). At step 504, the customer premises address at which a given utility meter is located may be stored in memory for each utility meter. In addition, or alternately, the customer's name, account number, premise ID, and/or phone number also may be associated with the meter in memory.

At step 506 the PLS may store information which identifies the PLCD 133 (e.g., serial number, IP address, MAC address, etc.) and associated information (e.g., structure number, information of the associated distribution transformer, GPS coordinates, street address) sufficient to correlate the PLCD 133 to a specific distribution transformer. In one example embodiment, the PLS identifies the PLCD 133 having a structure number that is closest to the structure number associated with a distribution transformer, which may, for example, be the same pole number or adjacent pole number. Typically, the distribution transformer associated with the PLCD 133 will be the distribution transformer connected to the LV power lines to which the PLCD 133 is connected (and over which the PLCD 133 communicates). In other embodiments, information identifying the distribution transformer to which the PLCD 133 is connected may be recorded at installation of the PLCD 133 and stored in the PLS.

As discussed, each PLCD 133 may perform a communication test, and report the results to the PLS. One of the PLCDs 133, is selected to serve as the communication node for communications with the utility meter and this information is stored in memory. Accordingly, a utility meter may be assigned to a particular PLCD 133. At step 508, the PLCD 133 communicating with each meter is determined - either retrieved from memory (from a previous assignment of the PLCD) or determined as a result of the assignment process. Thus, for an electronic utility meter in a power distribution system, its assigned PLCD 133 typically will be the PLCD 133 connected to the LV power lines of the transformer 112 providing power to the customer premises 160 at which the utility meter 162 is located (see Figure 2).

At step 509, the process includes determining a transformer associated with the selected PLCD 133. In this example, step 509 comprises identifying the transformer to whose LV power lines the selected PLCD 133 is connected. In some embodiments, this may simply including retrieving the data from memory (e.g., which may have been stored at step 506) or may include processing the data to identify the transformer. At step 510, the transformer 112 coupled to the utility meter 162 may be identified based on the determination at step 508. In other words, the distribution transformer 112 associated with the PLCD 133 determined to provide communications to the utility meter 162 typically will be the transformer 112 connected to the utility meter 162. One of the benefits of associating a utility meter 162 with a transformer 112 is that an accurate map of the power distribution system, including transformers and utility meters, may be obtained. Such a map provides for the creation of a virtual metering point at the transformer. This virtual metering point is derived by an aggregation of all individual meters served by that transformer. This virtual metering point provides great value to the transmission and distribution activities. It allows an accurate view of transformer loading and thereby an ability to predict transformer life-cycle events. Such a map enables localized direct load control events. This would allow the utility to shed load based on events occurring at a specific transformer versus at a feeder or substation level. Such a map may be advantageous for identifying customers that may be affected by various power line problems and maintenance operations. Such a map also may be useful for identifying a source location of a power line issue based upon the complaints or other communications of customers. At step 512, the process may further include determining the transformer supplying power to the customer premises. Knowing the customer premises associated with the meter 162 and the transformer connected to the same meter 162, the transformer connected to (and supplying power to) the customer premises may be determined. The results of all of the steps may be stored in memory for future processing as needed.

In addition, one more of the steps 502-512 may be performed anytime a customer contacts the utility reporting a power outage or other problem. Alternately, the data of which transformer is a customer is connected may be determined for each customer and may be retrieved from memory as necessary. In addition, the utilities typically have access to information (e.g., stored in a GIS database) identifying the MV power line supplying power to a distribution transformer. Thus, if the utility knows that a particular customer is experiencing power problems (e.g., power outage, brown out), the utility typically also will know the MV power line that may be causing the problem (in addition to just knowing the distribution transformer).

In another embodiment, all of the PLCDs 133 may be programmed to periodically (e.g., once, twice, three times, four times, or more per day) to change their network encryption key to the meter default encryption key and to "listen" for newly installed meters that are attempting to communicate (e.g., by sending a DHCP request or other communication negotiation). In yet another embodiment, the meters 162 are designed to initiate and attempt to communicate without encrypting data. While the above embodiment has been described in the context of power line communications, the same principals may be used for utility meters 162 and communication nodes 128 that can provide wireless communications.

It is worth noting that there may be rare instances in which a PLCD 133 that is not connected to the same LV subnet as the utility meter obtains better communication from the meter than another PLCD 133 that is connected to same LV subnet as the meter. For example, consider the premises 160f and 160m shown in Figure 2. The utility meter 162f which serves premises 160f is directly connected to the PLCD 133b by an LV power line 114f. The utility meter 162m of customer premises 160m is electrically connected to the PLCD 133c by LV power line 114m. The LV power lines 114f and 114m, in this example scenario, run parallel (and relatively close to each other) for some distance allowing cross-coupling of power line communication signals between the two LV power lines 114f and 114m. In addition, the PLCD 133c may have a have poorer communication quality along the LV power line 114m, which may be due to any number of reasons, such as branches along the power line 114 or interference with communication signals. As a result, the PLCD 133b may have better quality of communications with utility meter 162m than the PLCD 133c. The PLS 118 may compare the results of all the communications tests with a given utility meter 162 to determine which PLCD 133 is to act as the meter's communication node. In particular, one PLCD 133 is assigned to serve as the communications node 128 for the utility meter and to receive (and communicate) utility data for that meter.

While the above described embodiment employs electronic meters in conjunction with a PLCD 133 to determine which transformer is serving a customer premises, instead of a meter other embodiments may use other communication devices in the customer premises such as, for example, a fire/smoke alarm system, a security system, load control devices, a computer, and any other suitable device that can be configured (e.g., by use of a power line modem) to communicate of the low voltage power lines with a PLCD 133. In yet other embodiments, a customer premises that includes a load control device connected to a load can be triggered by the PLCDs 133 (e.g., sending a control message wirelessly, via power lines, via coax) while the PLCDs 133 measure the current of the LV power line at the distribution transformer. The PLCD 133 that detects a current increase (or decrease) in response to the control message can be identified to determine that its associated transformer is supplying power to the customer premises in which the load control device is located. While the above embodiments have been described in the context of an overhead power distribution system, the present invention is also well suited for use in underground power distribution systems and in multi-dwelling unit structures.

Once it is determined which distribution transformer provides power to which customer premises, various additional applications may be implemented. For example, when it is determined that a particular transformer is overloaded, additional actions may be taken to reduce the load on that transformer. A transformer may be determined to be overloaded when its measured output power (current or current and voltage measured by the PLCD) are above a threshold value, which threshold value may be related to (e.g., a percentage over or equal to) the rating of the transformer (which data may be stored in memory of the PLCD or remotely). Systems, devices, and methods for detecting a transformer overload are provided in U.S. Appl. No. 11/756,858, filed June 1, 2007, entitled, System and Method for Detecting Distribution Transformer Overload," which is hereby incorporated by reference in its entirety. When a transformer is determined to be overloaded, a load control application (e.g., resident on the PLS or PLCD) may transmit commands to load control devices in those customer premises that receive power from the overloaded transformer to shed loads (e.g., turn off (or disconnect) certain loads and or otherwise reduce the load on that transformer). Additionally, when a customer contacts the utility to report a power outage, the utility can easily determine which transformer to first inspect (i.e., the transformer servicing that customer's premises).

It is to be understood that the foregoing illustrative embodiments have been provided merely for the purpose of explanation and are in no way to be construed as limiting of the invention. Words used herein are words of description and illustration, rather than words of limitation. In addition, the advantages and objectives described herein may not be realized by each and every embodiment practicing the present invention. Further, although the invention has been described herein with reference to particular structure, materials and/or embodiments, the invention is not intended to be limited to the particulars disclosed herein. Rather, the invention extends to all functionally equivalent structures, methods and uses, such as are within the scope of the appended claims. Those skilled in the art, having the benefit of the teachings of this specification, may affect numerous modifications thereto and changes may be made without departing from the scope and spirit of the invention.

An alternative embodiment of the invention described and supported by the present specification, but not claimed in the appendant claims, is defined in the following paragraphs:-

A method of establishing communications between a plurality of power line communication devices, each electrically connected to a different low voltage power line, and a plurality of electronic utility meters connected to a plurality of low voltage power lines, comprising:
storing meter information for each of the plurality of meters in a memory;
storing a customer address associated with each of the plurality of meters in a memory;
storing location information for the plurality of power line communication devices (PLCDs);
for each utility meter:
   transmitting control data to one or more PLCDs, wherein the control data includes a command to communicate with the utility meter;
   receiving information of communications of the meter from at least one of the one or more PLCDs; and
   assigning one of the one or more PLCDs to be a communication node for the meter based on the received information.

The method according to paragraph [0077], further comprising transmitting information of said assigning to the PLCD assigned to be the communication node for the meter.

The method according to paragraph [0077], wherein said receiving information of communications comprises receiving information indicative of the quality of communications with the meter.

The method according to paragraph [0079], further comprising selecting a PLCD to be assigned to the meter based on the information indicative of the quality of communications with the meter received from the selected PLCD.

A method of determining the power distribution transformer supplying power to a customer premises having an associated utility meter; comprising:
storing information identifying the customer premises in a memory;
storing information identifying the associated utility meter for the customer premises in a memory;
storing information for a plurality of power line communication devices (PLCDs) in a memory;
determining one of the plurality of PLCDs with which the associated utility meter communicates;
determining a first distribution transformer associated with the one PLCD; and
determining that the customer premises is supplied power via the first distribution transformer.

The method according to paragraph [0081], wherein said determining a first distribution transformer associated with the one PLCD comprises determining a distribution transformer to which the one PLCD is electrically connected.

The method according to paragraph [0081], wherein said storing information identifying the customer premises comprises storing an address of the customer premises and storing information for a plurality of power line communication devices comprises storing location information for the plurality of PLCDs.

The method according to paragraph [0081], wherein said storing information for a plurality of power line communication devices comprise storing an associated distribution transformer for each of the plurality of PLCDs.

The method according to paragraph [0081], wherein said storing information for a plurality of power line communication devices comprises storing location information for each of the plurality of PLCDs.

The method according to paragraph [0081], wherein said determining a first distribution transformer associated with the one PLCD comprises retrieving information from memory that include the first distribution transformer associated with the one PLCD.

A method of determining power distribution system configuration information, comprising.
storing meter information for each of a plurality of meters in a memory;
associating in a memory a distribution transformer with each of a plurality of power line communication devices (PLCDs) connected to different low voltage power lines;
determining one of the plurality of PLCDs with which each of the plurality of meters communicates; and
for at least one of the plurality of meters; determining a distribution transformer to which the meter is electrically connected based on the distribution transformer associated with the PLCD with which the meter communicates.

The method according to paragraph [0087], further comprising storing location information of the plurality of PLCDs in a memory.

The method according to claim 31, wherein said associating in a memory a distribution transformer with each of a plurality of PLCDs is accomplished by using the location information.

The method according to paragraph [0087], wherein the meter information includes a serial number.

The method according to paragraph [0087], wherein the meter information includes a MAC address.

The method according to paragraph [0087], wherein said associating in a memory a distribution transformer with each of a plurality of PLCDs comprises using a structure number of each of the plurality of PLCDs and a structure number of the associated distribution transformers.

The method according to paragraph [0087], further comprising:
storing customer identifying information in association with each of the plurality of meters in a memory; and
determining the distribution transformer supplying power to a customer based on the distribution transformer to which a meter, associated with the customer, is connected.

A method of determining the power distribution transformer supplying power to a customer premises having an associated power meter; comprising:
storing in a memory identification information of the associated power meter for the customer premises;
storing in a memory customer identifying information for the customer premises;
determining a first PLCD of a plurality of PLCDs with which the associated power meter communicates;
determining a first distribution transformer associated with the first PLCD; and
determining that the customer premises is supplied power via first distribution transformer.

The method according to paragraph [0094], wherein said determining a first distribution transformer associated with the first PLCD comprises retrieving information of the first distribution transformer from a memory.

The method according to paragraph [0094], wherein said determining an a first distribution transformer associated with the first PLCD performed using a structure number of the first PLCD and a structure number of the first distribution transformer.

The method according to paragraph [0094], wherein said determining that the customer premises is supplied power via the first distribution transformer is performed in response to a report of a power distribution system event associated with the customer premises.

The method according to paragraph [0094], further comprising determining a medium voltage (MV) power line supplying power to the customer premises by determining the MV power line connected to the first distribution transformer.

A method of using a power line communication device that is connected to a low voltage power line to establish communications with one or more electronic utility meters, comprising:
setting an encryption key parameter to a first encryption key;
establishing communications via one or more low voltage power lines with the one or more utility meters;
transmitting data of the one or more utility meters with which communications are established to a remote computer system;
receiving information of meters assigned to the power line communications device; and
storing information of the assigned meters in a memory.

The method according to paragraph [0099], wherein the information of the assigned meters stored in memory includes a media access control address of the assigned meters.

The method according to paragraph [0099], wherein the information of the assigned meters stored in memory is used by a routing device of the PLCD.

The method according to paragraph [0099], further comprising:
transmitting encryption key data to the assigned meters;
wherein the encryption key data includes information of a second encryption key;
setting the encryption key parameter to the second encryption key; and
communicating with the assigned meters using the second encryption key.

## Claims

1. A method of using a power line communication device that is connected to a low voltage power line to establish communications with one or more electronic utility meters, comprising:
setting an encryption key parameter to a first encryption key used by the one or more electronic utility meters;
establishing communications via one or more low voltage power lines with the one or more utility meters using the first encryption key;
assessing a quality of communications with the one or more utility meters;
transmitting communications quality data to a remote computer system;
receiving information of assigned meters; and
storing information of the assigned meters in memory.

2. The method according to claim 1, wherein the first encryption key comprises a default encryption key used by the one or more electronic utility meters.

3. The method according to claim 1, wherein the information of the assigned meters stored in memory is used by a routing device.

4. The method according to claim 1, further comprising:
transmitting encryption key data to the assigned meters;
wherein the encryption key data includes information of a second encryption key;
setting the encryption key parameter to a second encryption key; and
communicating with the assigned meters using the second encryption key.

5. The method according to claim 1, wherein said assessing a quality of communications comprises intelligibly receiving data.

6. The method according to claim 1, wherein the assigned meters is a subset of the one or more meters.

7. A method of using a power line communication device that is connected to a low voltage power line to establish communications with one or more electronic utility meters, comprising:
establishing communications via one or more low voltage power lines with the one or more utility meters;
assessing a quality of communications with the one or more utility meters;
transmitting data of the assessed quality of communications to a remote computer system;
receiving information of assigned meters; and
storing information of the assigned meters in a memory.

8. The method according to claim 7, wherein the information of the assigned meters stored in memory is used by a routing device.

9. The method according to claim 7, further comprising:
transmitting encryption key data to the assigned meters;
wherein the encryption key data includes information of a first encryption key;
setting the encryption key parameter to a first encryption key; and
communicating with the assigned meters using the first encryption key.

10. A method of establishing communications between a plurality of power line communication devices, each electrically connected to a different low voltage power line, and one or more electronic utility meters connected to a plurality of low voltage power lines, comprising.
at each of the plurality of electronic utility meters,
attempting to communicate using a first encryption key; at each of the plurality of PLCDs,
setting an encryption key parameter to the first encryption key;
responding to communication attempts of one or more of the utility meters;
assessing a quality of a communication link with each of the one or more utility meters;
transmitting link quality data to a remote computer system;
receiving information of an assignment of at least some of the one or more utility meters; and
storing information of the assignment in memory.

11. The method according to claim 10, wherein the first encryption key comprises a default encryption key used by the one or more electronic utility meters.

12. The method according to claim 1, claim 7 or claim 10, wherein the information of the assigned meters stored in memory includes a media access control address of the assigned meters.

13. The method according to claim 10, wherein the information of the assigned meters stored in memory is used by a routing device forming part of a power line communication device (PLCD).

14. The method according to claim 10, further comprising at each of the plurality of PLCDs:
transmitting encryption key data to one or more assigned meters;
wherein the encryption key data includes information of a second encryption key; and
communicating with the assigned meters using the second encryption key.

15. The method according to claim 1, claim 7 or claim 10, wherein said assessing the quality comprises performing a communications test by transmitting data to one or more of the utility meters or to each one of the respective one or more utility meters.
